# EUROPEAN PATENT APPLICATION

(11) **EP 0 860 776 A1**
(43) Date of publication of application: **26.08.1998**
(21) Application number: 98102297.3
(22) Date of filing: 10.02.1998
(51) Int. Cl.: G06F 9/46

(54) **Inter-object communication method**

(30) Priority: 19.02.1997 JP 51090/97
(71) Applicant: Hitachi, Ltd., Chiyoda-ku, Tokyo 101-0062 (JP)
(72) Inventor: Aoshima, Tatsundo, Sagamihara-shi (JP); Hashimoto, Tetsuya, Suginami-ku, Tokyo (JP)
(74) Representative: Strehl Schübel-Hopf & Partner

(57) **Abstract**

A method for converting an interface definition description and an inter-object communication method, in which a service provider can control a message delivery method to realize communication based not on object designation but on service designation. In the methods, a client stub (1c), a server skeleton (2s) and a routing program (1r,2r) are generated from an interface definition defined by the service provider. A client object (10) calls the client stub, and sends a message whose send destination is specified by an interface name. The server skeleton registers a provided service in a routing information table (31). A router (12,22) determines a server object (20) as the send destination on the basis of a routing program associated with the interface name of the send message, a message queue information table (30) and the routing information table (31), and sends the message.

## Description

### BACKGROUND OF THE INVENTION

The present invention relates to an inter-object communication method in an application which uses a plurality of objects to be operated on a single computer or on a plurality of computers connected in a network and more particularly, and also relates to a method for converting an interface definition in such an application.

Conventional inter-object communication method in an application which uses a plurality of objects to be operated on a single computer or on a plurality of computers connected in a network, includes a common object request broker architecture (CORBA)(Architecture and Specification Revision 2.0, July 1995, OMG) in the Object Management Group (OMG). In the CORBA, when interface definition language (IDL) is used, an object interface can be defined independently of a programming language for describing the objects.

When an interface definition described in the IDL is converted by an IDL compiler, there are automatically generated a client stub (term often used in the above CORBA) associated with a client program to play a role in sending a message from the client program to a server program as well as a server skeleton (term often used in the above CORBA, which is also a template for processing description) corresponding to a description part of the server program other than an original processing description part thereof, thus enabling relief of programmer's burden.

Actual communication between the programs is carried out on the basis of the object request broker (ORB) technique.

The client program searches for a communication destination object on the basis of the name, acquires as its searched result an object reference (which is information indicative of the presence location of the object (server program)) associated with the server program corresponding to the object in a one-to-one relationship; whereas, the client program transmits a message to the server program by calling a client stub generated from the interface associated with the object reference.

Thereby a programmer of the client program can describe the original-processing description part of the application program without recognizing the physical position of the server program or the actual protocol.

Meanwhile, a programmer of the server program is only required to describe only the original processing of the application program without recognizing the actual communication protocol.

### SUMMARY OF THE INVENTION

It is therefore an object of the present invention to provide a programming method centered on the original processing (service) provided by a server object while securing the above advantages of a CORBA, and also to provide an inter-object communication method.

The object includes five sub-objects which follow.

First one of the sub-objects is to enable communication with the server object which provides a service without any need for specifying the object itself, by specifying the service.

Second one of the sub-objects is to suitably deliver a communication message to the server object which provides the service.

Third one of the sub-objects is to eliminate the need for modifying the client object at the time of adding, deleting or modifying the server object which provides the service.

Fourth one of the sub-objects is to enable the service provider and the programmer of the server object to control the message distribution method.

Fifth one of the sub-objects is to centralizedly manage a program module associated with one application to simplify its installing operation.

In accordance with an aspect of the present invention, the above objects can be attained by providing a method for converting an interface definition description in an inter-object communication system wherein a client object operating on either one of a plurality of computers in a network or on a single computer sends a message to a server object operating on the same or another computer to execute a predetermined processing operation.

In this invention, the method includes the step of causing an interface definition converting program to convert the interface definition description described in an interface definition language to thereby generate a client stub, a server skeleton and a routing program. The interface definition description includes one or more of data necessary for the predetermined processing operation, a method definition description of a processing result, and a message description for specifying a format of the message to be sent in response to the method definition description. The client stub is called to cause the client object to send the message. The server skeleton includes a server registration method for storing, in routing information memory means, routing information for specifying the format of the message which the server object itself can process when started and also includes a method for describing the predetermined processing operation to be executed when the server object receives the message. The routing program judges whether or not the processing of the server object associated with the routing information of the message is possible through comparison between the message and the routing information.

In accordance with another aspect of the present invention, there is provided an inter-object communication system wherein a client object operating on either one of a plurality of computers in a network or on a single computer sends a message to a server object operating on the same or another computer to execute a predetermined processing operation. In this method, a client stub, a server skeleton and a routing program generated through the above conversion are stored in the computers. When the server object is started, a server registration method is called and routing information is stored in routing information memory means to cause the client object to call the client stub to send the message and to hold the sent message in a send message queue. A router extracts the message from the send message queue, to determine a send destination object according to the routing program and to add the received message in a receive message queue associated with the send destination object. The server skeleton extracts the message from the receive message queue and the server object executes the predetermined processing operation of the message extracted by the server skeleton.

In the method, the routing program adds a queueing option description including a message maximum number designation and a queueing time designation to a message description of the interface definition description, compares the message and the routing information to judge whether or not the processing operation by the server object associated with the routing information of the message is possible and, in the case of presence of the message maximum number designation, performs the queueing option judging operation.

In the inter-object communication system, the router keeps the message extracted from the send message queue in a temporary keep message queue, and when another message has the same contents as the kept message, the router integrates the messages into a single message, and when the number of messages within the temporary keep message queue exceeds the message maximum number or when the queueing time elapses after the message is queued, the router adds the message to a receive message queue associated with the send destination object.

In the method, in place of the routing program, such a custom routing program is generated as to compare the message and the routing information to judge whether or not the processing operation by the server object associated with the routing information of the message is possible and to perform the matching option judging operation.

In the inter-object communication system, further, the client stub, the server skeleton and the routing program are combined into a single server object to store the service object in a service object memory means; the server object is extracted from the service memory means to call the client stub before the client object sends a message; the server object is extracted from the service memory means to call the routing program before the router determines the send destination object; and the server object is extracted from the service memory means to call the server skeleton at the time of starting the server object.

### BRIEF DESCRIPTION OF THE DRAWINGS

Fig. 1 shows a general arrangement of an embodiment of the present invention;
Fig. 2 shows a structure of an IDL compiler and a relationship thereof with an interface definition file, a client stub, a server skeleton, a routing program;
Fig. 3 is a flowchart for explaining how to generate the client stub;
Fig. 4 is a flowchart for explaining how to generate the server skeleton;
Fig. 5 is a flowchart for explaining how to generate the routing program;
Fig, 6 shows an exemplary structure of the interface definition file;
Fig. 7 shows an exemplary structure of the client stub;
Fig. 8 shows an exemplary structure of the server skeleton;
Fig. 9 shows an exemplary structure of the routing program;
Fig. 10 shows a structure of a message queue;
Fig. 11 is a structure of a message queue information table;
Fig. 12 shows a structure of a routing information table;
Fig. 13 is a flowchart for explaining a client stub process;
Fig. 14 is a flowchart for explaining a server skeleton process;
Fig. 15 is a flowchart for explaining a routing process;
Fig. 16 shows an arrangement of an inter-object communication system using a dynamic service object loader; and
Fig. 17 shows a structure of a server object.

### DESCRIPTION OF THE PREFERRED EMBODIMENTS

An embodiment of the present invention will be detailed below with reference to the drawings.

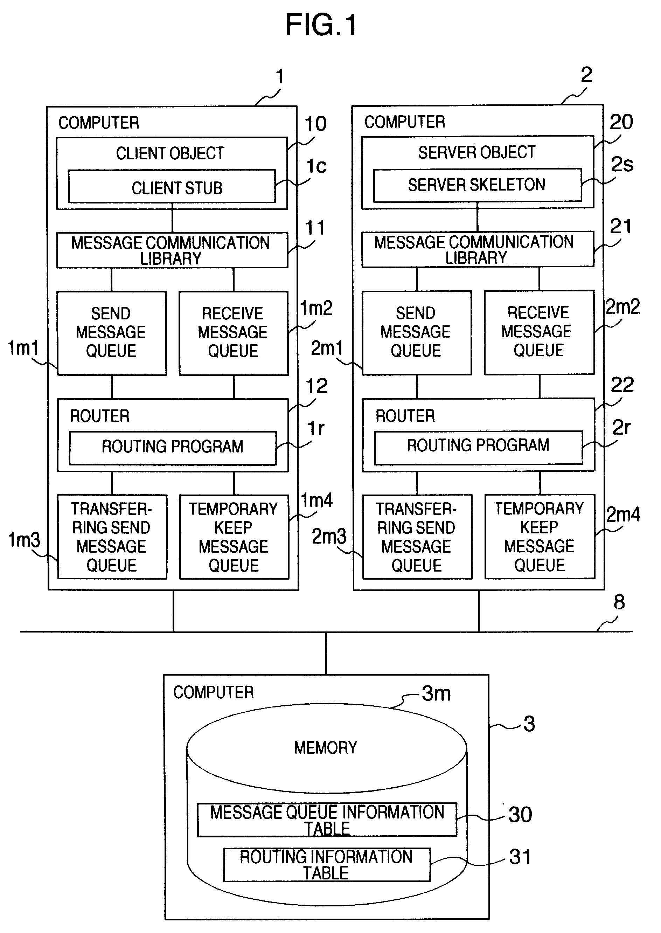

Referring first to Fig. 1, there is shown an entire arrangement of an embodiment of the present invention.

In the present embodiment, computers 1, 2 and 3 are connected in a network 8.

A client object 10 as a program for requiring a service to a server is present in the computer 1, and, a server object 20 as a program for executing a service in response to a request from a client is present in the computer 2 independently from each other.

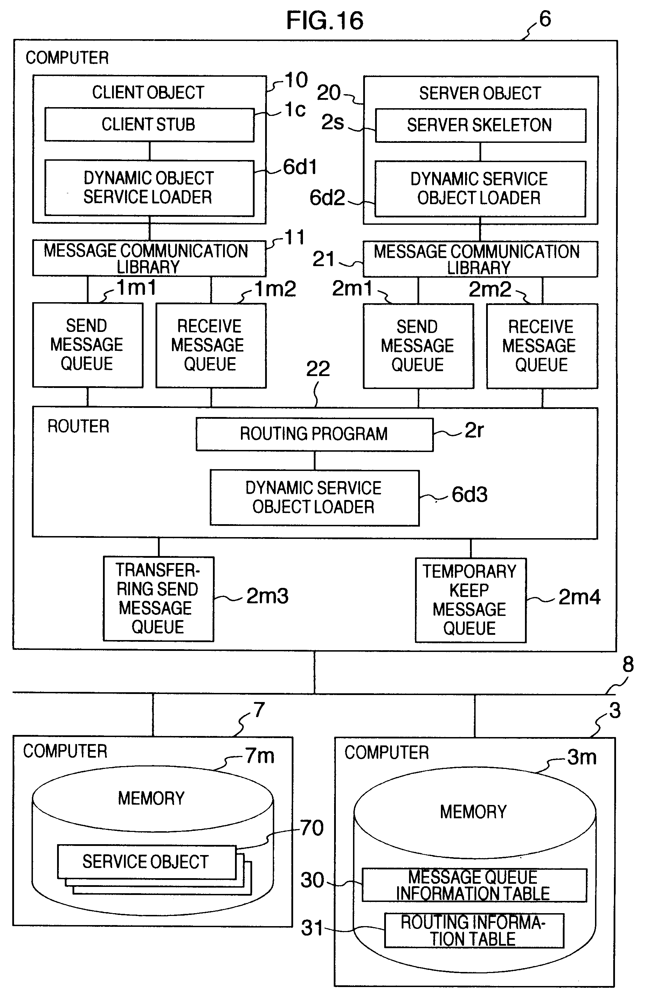

In the inter-object communication of the present invention, however, it is possible that a client object 10 and the server object 20 are both present in the same computer 6 as shown in Fig. 16, and it is also possible that a plurality of client objects 10 and a plurality of server objects 20 are mixedly present in a single computer.

In addition, it is also possible to place a memory 3m of the computer 3 in the computer 1 or 2.

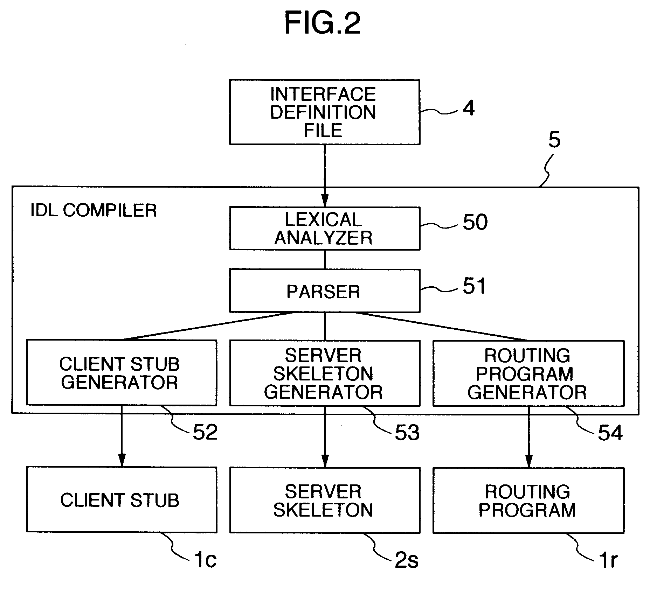

Fig. 2 schematically shows how to generate a client stub 1c for sending a message from the client program to the server program, a server skeleton 2s for serving as a template for processing description of the server program, and a routing program 1r for judging whether or not the service can be processed by the server object on the basis of the received message, from an interface definition file 4 prepared in an interface definition language (IDL) by a service provider with use of an interface definition conversion program 5 (IDL compiler 5).

The IDL compiler 5 includes a lexical analyzer 50, a parser 51, a client stub generator 52, a server skeleton generator 53 and a routing program generator 54.

The lexical analyzer 50 analyzes a token while reading the interface definition file 4 and provides information on the read token to the parser 51.

The parser 51 performs its analyzing or parsing operation using the above information and calls the client stub generator 52, server skeleton generator 53 and routing program generator 54.

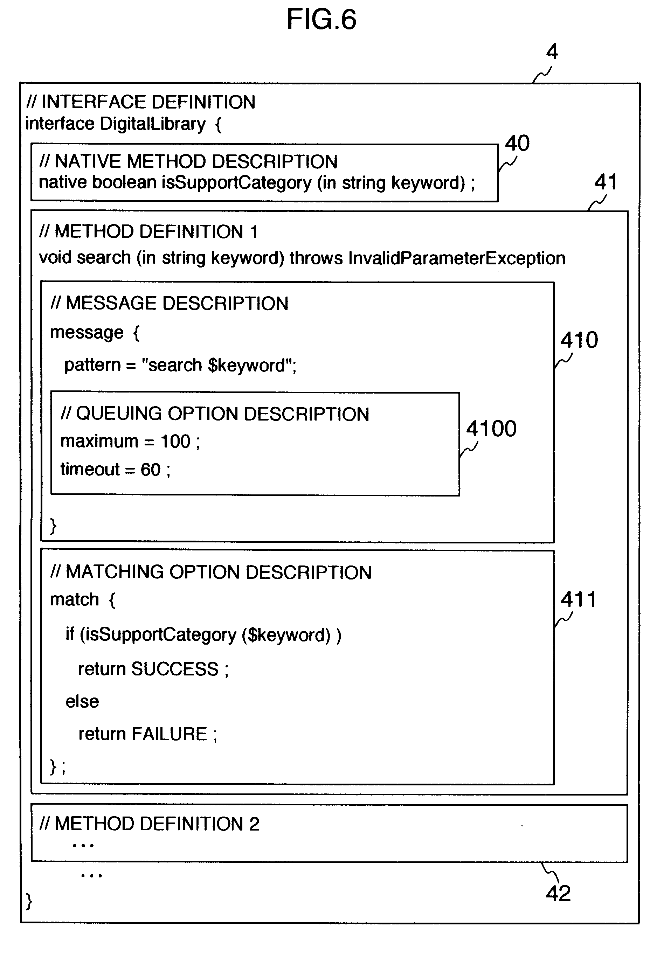

Shown in Fig. 6 is a structure of an example of the interface definition file.

The interface definition file 4 is a further extension of the IDL description used in the CORBA.

The interface definition file 4 has a native method description 40 for calling an external method, and method definitions 41 and 42 corresponding to services provided by the server object.

The method definition 41 has a method declaration (corresponding to a description "void search... Exception" given under Method Definition 1) used in the CORBA, a message description 410 and a matching option description 411 for performing a strict matching operation based on user's instruction as an option.

The matching option description 411 is described in a language independent format as in the case where the CORBA IDL description is language-independent.

The example of Fig. 6 shows the message description 410 indicating that a communication message has a pattern of "search $keyword", where a token starting with $ is a parameter.

The matching option description 411 is one which judges whether or not the parameter "$keyword" can be processed with use of the method "isSupportCategory()" declared in the native method description 40.

The message description 410 may include a queueing option description 4100 as an option.

In the example of Fig. 6, the maximum number 'maximum' of messages handleable in the message integrating operation is specified to be 100, and the longest message queueing time is specified to be 60 seconds.

The message integration will be described later.

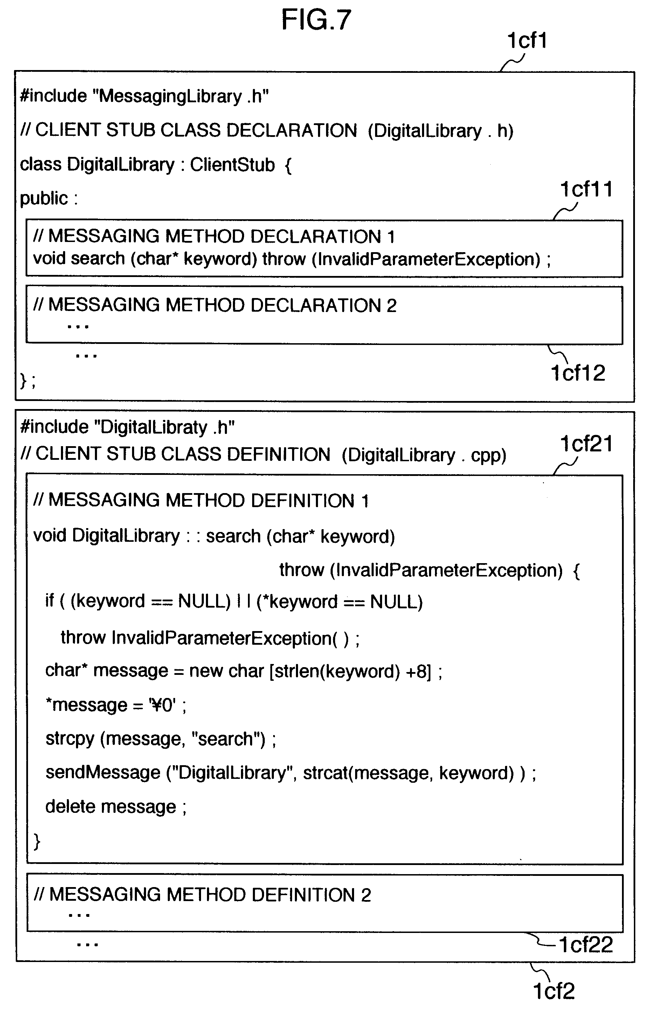

Fig. 7 shows a structure of an example of the client stub compiled and generated by the IDL compiler from the interface definition file 4 shown in Fig. 6 as an example. The generated client stub 1c is described in source level language. In the example of Fig. 7, C++ is used as a programming language after the compilation.

The client stub 1c in compiled code is prepared by compiling a client stub header file 1cf1 and a client stub source file 1cf2.

The client stub header file 1cf1 includes messaging method declarations 1cf11 and 1cf12 called by the client object 10.

The client stub source file 1cf2 includes messaging method definitions 1cf21 and 1cf22.

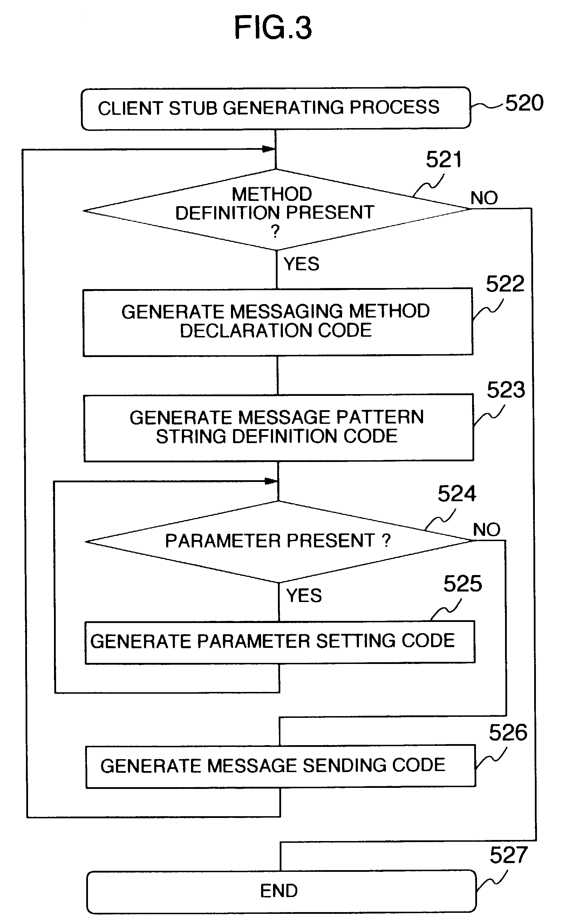

Shown in Fig. 3 is a flowchart for explaining a client stub generating process by the client stub generator 52.

A client stub generating process 520, when called by the parser 51, analyzes the interface definition file 4 sequentially from the method definition 41 therein, repeats its subsequent processing operations on the basis of a judgement step 521 on whether or not there is a method definition, and if there is no definition, terminates its operation at an end step 527.

In compiling the method definition 41, at a messaging method declaration code generation step 522, there are generated the messaging method declaration 1cf11 and a protocol type declaration part (which corresponds to "void DigitalLibrary... Exception" given below the Messaging Method Definition. The declaration part in the C++ language is also called a prototype declaration part) of the messaging method definition 1cf21.

Next, at a message pattern string definition code generation step 523, codes for preparation of a message string not containing a parameter are generated in the messaging method definition 1cf21.

When a parameter is present in the message string, the system repeats the operation of a parameter setting code generation step 525 on the basis of a judgement result of the step 524 indicative of the presence of absence of a parameter. At the parameter setting code generation step 525, the system generates in the messaging method definition 1cf21 codes for addition of a parameter string to the above message string.

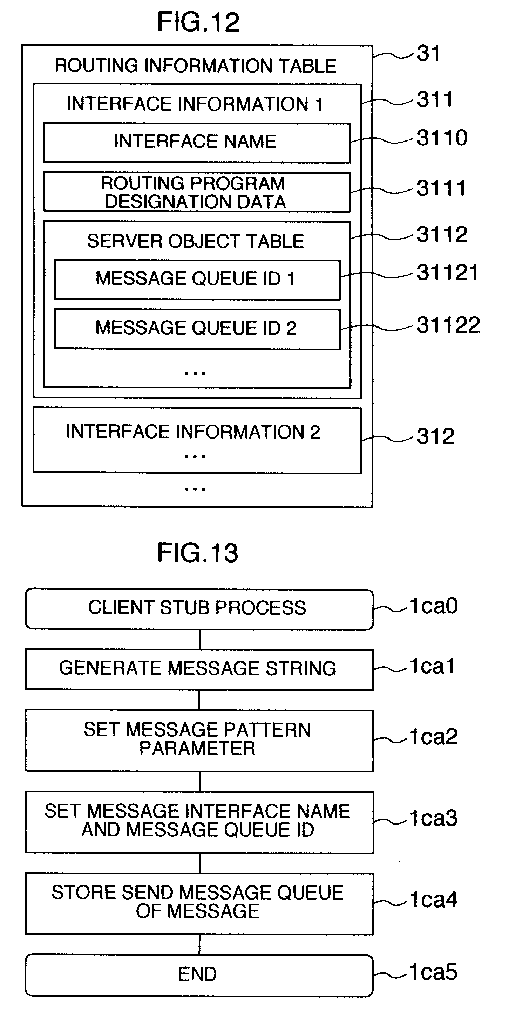

Finally, at a message sending code generation step 526, the system generates in the messaging method definition 1cf21 codes for calling of a message sending function of a message communication library 11 (see Fig. 11) with use of an interface name ("DigitalLibrary") and the message string as parameters.

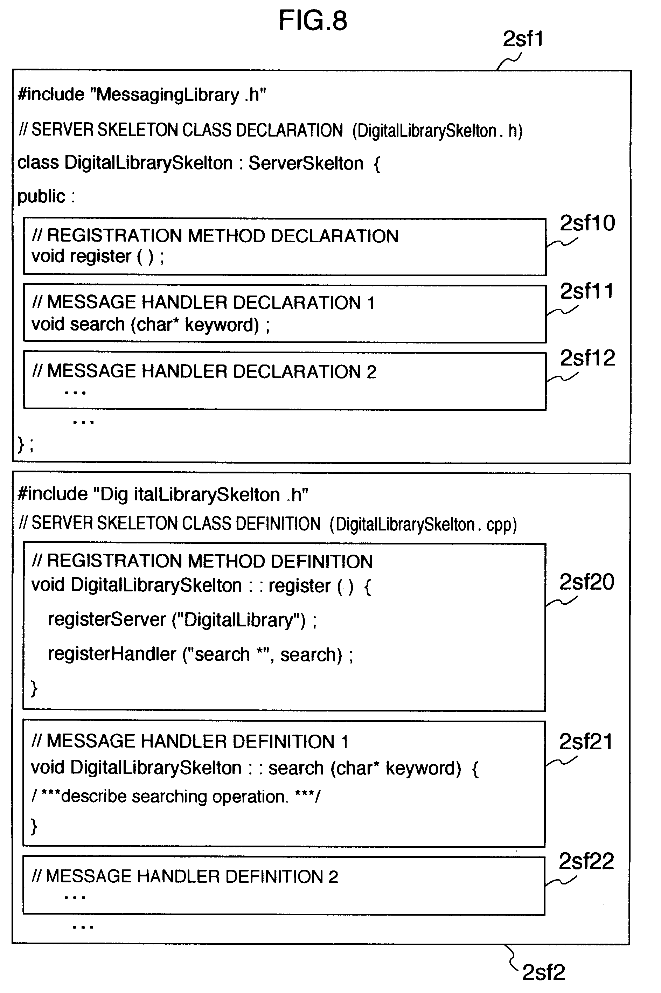

Fig. 8 shows a structure of an example of the server skeleton compiled and generated by the IDL compiler from the interface definition file 4 of Fig. 6. The generated server skeleton 2s is described in source level language. Even in the example of Fig. 8, C++ is used as a programming language after the compilation.

The server skeleton 2s in compiled code is generated by compiling a server skeleton header file 2sf1 and a server skeleton stub source file 2sf2.

The server skeleton header file 2sf1 includes a registration method declaration 2sf10 to be called for registration of the server object 20 in the routing information table (see Fig. 1) at the time of activating the server object 20 and messaging handler declarations 2sf11 and 2sf12.

The server skeleton stub source file 2sf2 includes a registration method definition 2sf20 and messaging handler definitions 2sf21 and 2sf22.

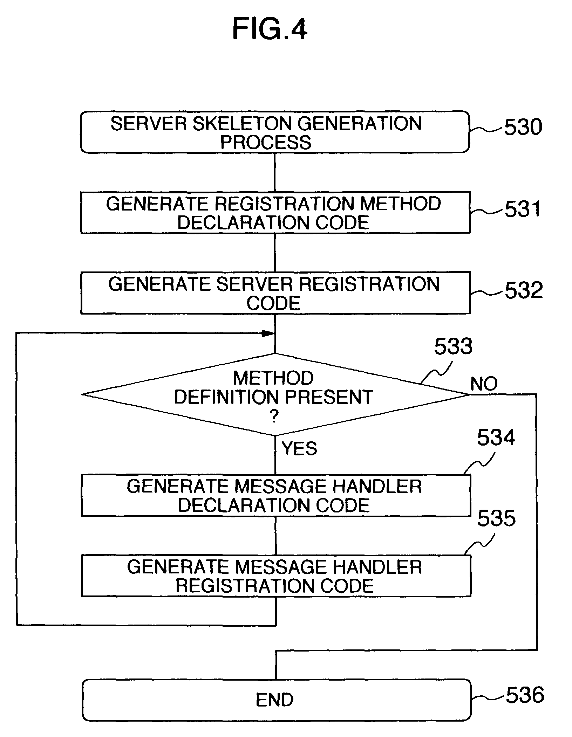

Fig. 4 is a flowchart for explaining the operation of a server skeleton generation process 530 by the server skeleton generator 53.

The server skeleton generation process 530 is called by the parser 51.

At a registration method declaration code generation step 531, the system generates the registration method declaration 2sf10 and a prototype declaration part (corresponding to "void Digital...register()" given below the Registration Method Definition) of the registration method definition 2sf20.

At a server registration code generation step 532, the system generates in the registration method definition 2sf20, a code for registration of the server object 20 (refer to Fig. 1) in the routing information table (refer to Fig. 1) with use of the interface name ("DigitalLibrary") as an argument.

Next, the system analyzes the method definition 41 of the interface definition file 4 (refer to Fig. 6) sequentially, repeats the subsequent operations on the basis of a judgement result of a step 533 of judging the presence or absence of a method definition, and in the absence of a definition, terminates its operation at an end step 536.

At a message handler declaration code generation step 534, the system generates the messaging handler declarations 2sf11 and 2sf12 as well as prototype declaration parts (corresponding to "void Digital....keyword" given below Message Handler Definitions 1 and 2) of the messaging handler definitions 2sf21 and 2sf22.

Described in a body of the message handler definition are the original operations of services provided by the server object. The original operations are described by the programmer of the server object.

At a message handler registration code generation step 535, the system generates in registration method definition 2sf20, a code for registering in a message communication library 21 (refer to Fig. 1) a character string corresponding to a conversion of parameters specified in the message description 410 into a standard representation based on predetermined rules as well as a message handler as arguments.

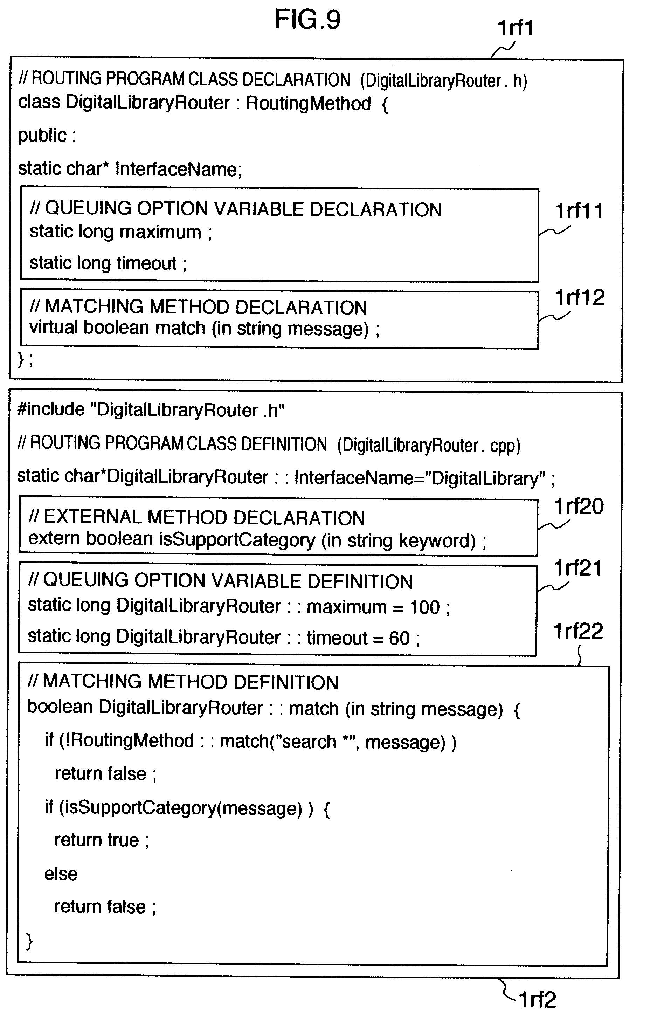

Fig. 9 is a structure of an example of the routing program compiled and generated by the IDL compiler from the interface definition file 4 shown in Fig. 6. The generated routing program 1r is described in source level language. Even in this example, C++ is used as an example of the programming language after the compilation.

The routing program 1r is generated by compiling a routing program header file 1rf1 and a routing program source file 1rf2.

The routing program header file 1rf1 has an interface name variable declaration (corresponding to "static.....InterfaceName" given below the Routing Program Class Declaration, a queuing option variable declaration 1rf11 compiled from the queueing option description 4100 (see Fig. 6), and a matching method declaration 1rf12 to be called by a router 12 (see Fig. 1).

The routing program source file 1rf2 has an interface name variable declaration (corresponding to "static....."DigitalLibrary"" given below the Routing Program Class Definition), an external method declaration 1rf20 compiled from the native method description 40, a queuing option variable definition 1rf21 and a matching method definition 1rf22.

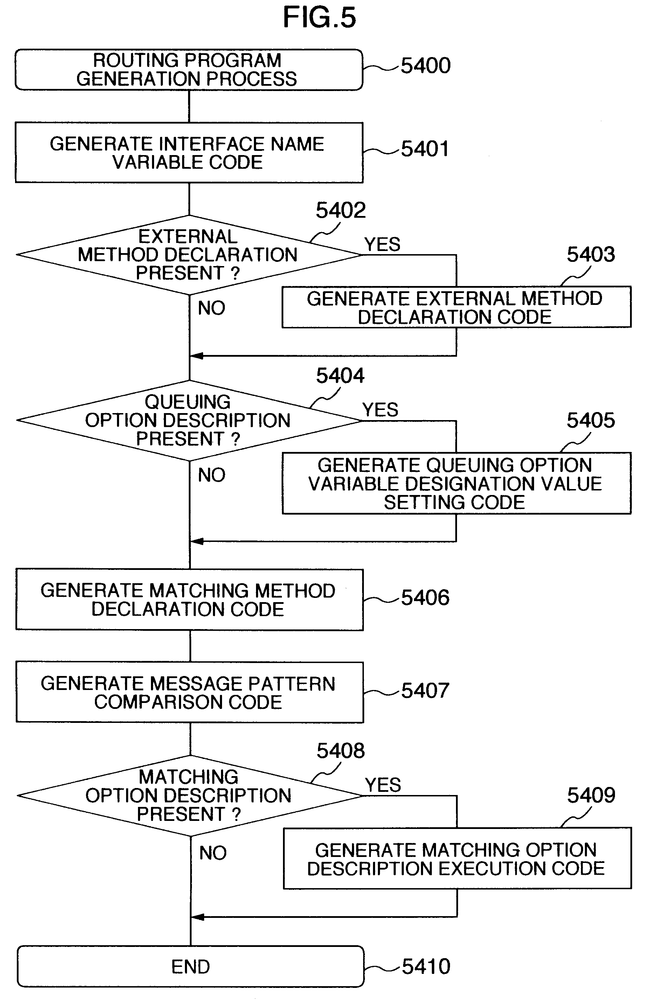

Shown in Fig. 5 is a flowchart for explaining the operation of a routing program generation process 5400 by the routing program generator 54.

The routing program generation process 5400 is called by the parser 51.

At an interface name variable code generation step 5401, the system generates a code for initialization of an interface name variable (corresponding to the above interface name variable definition).

Next, the system judges at a judgement step 5402 the presence or absence of an external method declaration. In the presence of an external method declaration, the system generates at an external method declaration code generation step 5403 the external method declaration 1rf20 compiled from the native method description 40.

Regardless of the judgement results of the judgement step 5402, the system judges at a judgement step 5404 the presence or absence of a queueing option description. In the presence of a queueing option description, the system generates the queuing option variable declaration 1rf11 compiled from the queueing option description 4100 and the queuing option variable definition 1rf21 at a step 5405 of generating a queueing option variable designation value setting code.

Regardless of the judgement result of the step 5402, the system generates at a step 5406 of generating a matching method declaration code the matching method declaration 1rf12 and a prototype declaration part (corresponding to "boolean....message" given below the Matching Method Definition) of the matching method definition 1rf22.

Next, at a message pattern comparison code generating step 5407, the system generates in the matching method definition 1rf22, a code for computing a character string corresponding to a conversion of a parameter of the message pattern specified in the message description 410 into a standard representation based on predetermined rules with a message as an argument of the matching method definition 1rf22. The system generates a code for returning a 'false' indicative of a failure when a coincidence therebetween is not found.

Finally, the system judges the presence or absence of a matching option description at a judgement step 5408 and, in some cases, generates in the matching method definition 1rf22 a code corresponding to a conversion of the matching option description 411 at a step 5409 of generating a matching option description execute code. The routing program in the presence of the matching description is called a custom routing program.

Regardless of the judgement result at the judgement step, the system terminates the operation of the routing program generator 54 at an end step 5410.

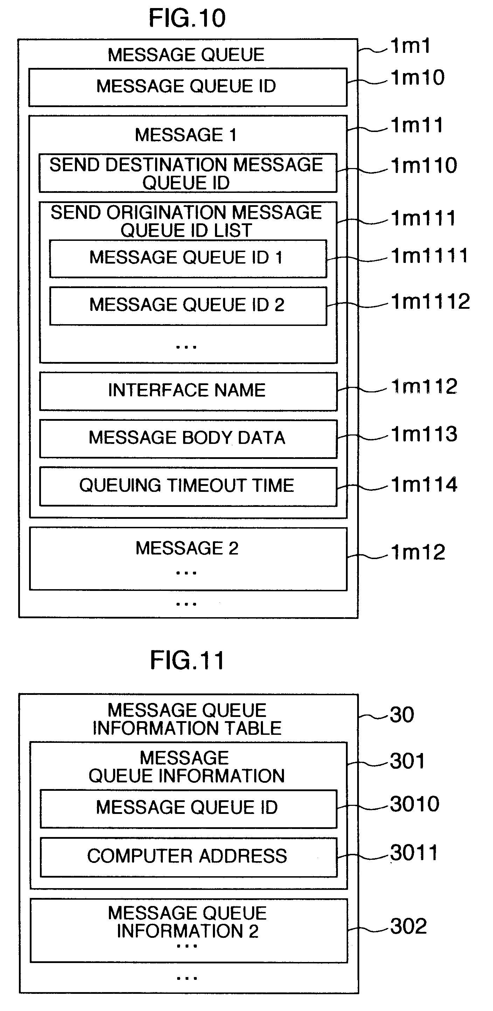

Fig. 10 shows a structure of a message queue.

A send message queue 1m1, a receive message queue 1m2, a transferring send message queue 1m3, a temporary keep message queue 1m4, a send message queue 2m1, a receive message queue 2m2, a transferring send message queue 2m3 and a temporary keep message queue 2m4, shown in Fig. 1 have different use purposes but all have such a message queue structure as shown in Fig. 10.

The send message queue 1m1 includes a message queue ID 1m10 for uniquely identifying a message queue and messages 1m11 and 1m12.

The message 1m11 in turn has a send destination message queue ID 1m110 indicative of send destination objects, a send origination message queue ID list 1m111 indicative of send origination objects, an interface name 1m112 of a service which the send origination object is to use, a message body data 1m113 indicative of a body of the message, and queuing timeout time 1m114.

When consideration is paid to a case of such message integration as will be described later, there exist a plurality of such send origination objects, to which end the send origination message queue ID list 1m111 has a message queue ID 1m1111 and a message queue ID 1m1112.

Fig. 11 shows a structure of a message queue information table 30 (see Fig. 1).

The message queue information table 30 includes message queue information items 301 and 302.

The message queue information item 301 has a message queue ID 3010 and a computer address 3011 indicative of an address of a computer having the message queue present therein.

Fig. 12 shows a structure of a routing information table 31 (see Fig. 1).

The routing information table 31 includes interface information items 311 and 312 corresponding to services provided by the server object.

The interface information item 311 has an interface name 3110, a routing program designation data 3111 indicative of a routing program which the router uses for determining a message transfer destination, and a server object table 3112 indicative of the server object 20 supporting the interface.

In the present invention, a plurality of the server objects 20 can be present to support a single interface, to which end the server object table 3112 has message queue IDs 31121 and 31122 of the receive message queues 2m2 of the server objects 20.

Shown in Fig. 13 is a flowchart for explaining the operation of a client stub process 1ca0 by the client stub 1c.

The client stub process 1ca0 is called by the client object 10.

At a message string generation step 1ca1, the system generates a message string corresponding to a method called by the client object 10.

At a message pattern parameter setting step 1ca2, the system sets an argument passed to the method for the message string as a parameter.

At a step 1ca3 of setting the interface name of the message and the message queue ID, the system sets the message queue ID 1m10 of the client object for the message queue ID 1m1111, sets the interface name for designation of a send destination of the message for the interface name 1m112, and sets the message string for the message body data 1m113 to thereby prepare the message 1m11.

Finally, at a step 1ca4 of storing a send message queue of the message, the system sets the prepared message 1m11 for the message queue 1m1 and then terminates its operation at an end step 1ca5.

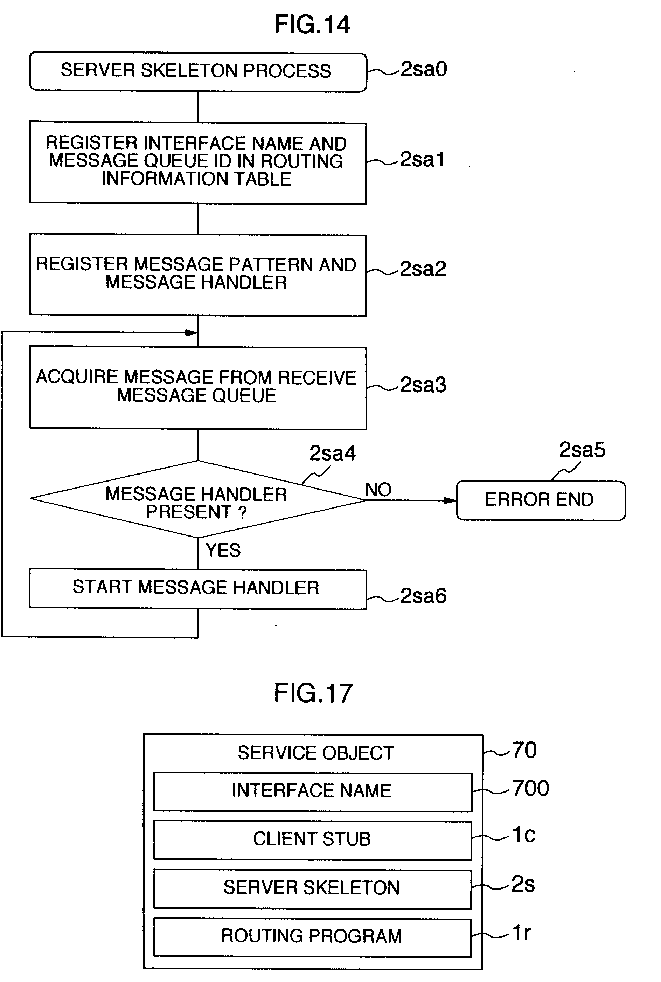

Referring to Fig. 14, there is shown a flowchart for explaining the operation of a server skeleton process 2sa0 by the server skeleton 2s.

The server skeleton process 2sa0 is called by the message communication library 21.

At a step 2sa1 of registering the routing information table of the interface name and message queue ID, the system searches the routing information table 31 for the interface name which the server object 20 supports on the basis of such an interface name 3110 as the interface information item 311 within the table, and when finding the interface name, the system registers the receive message queue 2m2 of the server object 20 in the server object table 3112 as the message queue ID 31121.

At a step 2sa2 of registering the message pattern and message handler, the system registers in a message communication library the messaging handler definition 2sf21 and a message pattern for starting the message handler thereof.

At a step 2sa3 of acquiring a message from the receive message queue, the system extracts the message 1m11 from the receive message queue 2m2.

The system next compares the message body data 1m113 of the message 1m11 with the message pattern to judge the presence or absence of the message handler at a step 2sa4, and in the case of the absence of the message handler, the system terminates its operation at an error end step 2sa5.

In the presence of the message handler, the system calls the message handler with use of the parameter extracted from the message as an argument at a message handler starting step 2sa6.

Thereafter, the system repeats at a step 2sa3 the operation of acquiring the message from the receive message queue.

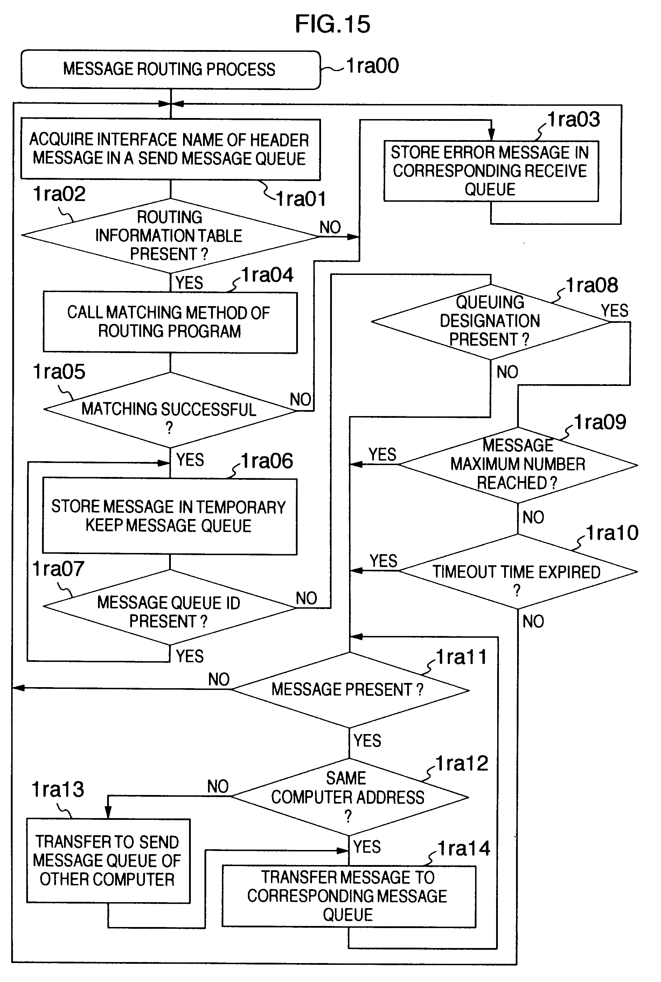

Fig. 15 shows a flowchart for explaining the operation of a message routing process by the routing program 1r.

First of all, at a step 1ra01 of acquiring the interface name of a head message of a send message queue, the routing program 1r selects one message 1m11 to be delivered and acquires its interface name 1m112.

At a step 1ra02 of judging the presence or absence of the acquired interface name 1m112 in the routing information table, the system searches the routing information table 31 for the interface name 1m112 on the basis of such an interface name 3110 as the interface information item 311 within the table.

If failing to find the interface name, at a step 1ra03 of storing an error message in the corresponding send queue, the system stores the error message in the receive message queue 1m2 and goes to the step 1ra01 to acquire the interface name of the head message of a send message queue.

If finding the interface name 3110, at a step 1ra04 of calling the matching method for the routing program, the system calls the matching method 1rf22 of the routing program 1r specified by the routing program designation data 3111 with use of the message body data 1m113 as an argument.

On the basis of the called result, the system determines at a step 1ra05 of judging whether or not the matching is successful, the system determines whether or not the determination of a delivery destination is successful.

If failing to determine the delivery destination, the system goes to the step 1ra03 to store the error message in the corresponding receive queue.

If finding the delivery destination, at a step 1ra06 of storing a message in a temporary keep message queue, the system stores the message 1m11 in the temporary keep message queue 1m4.

At this time, the system stores the message queue ID 31121 of the server object table 3112 in the send destination message queue ID 1m110 within the message 1m11, and stores in the queuing timeout time 1m114 a time corresponding to an addition of the timeout time specified in the queuing option variable definition 1rf21 to the storage time.

Further, at a step 1ra07 of judging the presence or absence of the message queue ID, the system performs the operation of the step 1ra06 of storing the message in the temporary keep message queue when finding the presence of the message queue ID 31122 within the server object table.

In the absence of the message queue ID, the system goes to a step 1ra08 to judge the presence or absence of queuing designation.

The queueing designation, which is a parameter designation relating to the message integration, uses the value of the queuing option variable definition 1rf21.

The definition value is 0 by default, in which case the system regards it as no queuing designation and performs no message integration and goes to a step 1ra11 to judge the presence or absence of messages.

In the presence of the queueing designation, the system judges whether or not the number of messages reaches its maximum.

The number of message queue IDs within the send origination message queue ID list 1m111 of the temporary keep message queue 1m4 corresponds to the number of integrated messages. Thus, when the ID number is larger than the designated maximum number, the system goes to the step 1ra11 to judge the presence or absence of messages.

In the case of absence of messages, the system judges whether or not the timeout time expired.

When the current time goes behind the timeout time 1m114, the system goes to the step 1ra11 to judge the presence or absence of messages.

In the case of the message absence, the system goes to the step 1ra01 to acquire the interface of the head message of a send message queue for processing of the next message.

At the step 1ra11 of judging the presence or absence of messages, the system searches for the temporary keep message queue 1m4 and, when the timeout time 1m114 of the message 1m11 expires, the system goes to a step ira12 to judge whether or not the computer addresses are the same.

If there is no message whose time is behind the timeout time, the system goes to the step 1ra01 to acquire the interface of the head message of a send message queue for processing of the next message.

At the step 1ra12 of judging whether or not the computer addresses are the same, the system compares the send destination message queue ID 1m110 of the message 1m11 with the message queue ID 3010 stored in the message queue information 301 and 302 of the message queue information table 30, and acquires the computer address 3011 of the coincided message queue information 301.

When the computer address 3011 is not the current computer address, the system goes to a step 1ra13 to transfer to the transferring send message queue of another computer, and for example, the system transfers the message 1m11 to the transferring send message queue 2m3 of the computer 2.

Regardless of the above judgement result, the system proceeds to a step 1ra14 to transfer a message to the next corresponding receive message queue. For example, the router 22 transfers the message 1m11 to the receive message queue 2m2 corresponding to the send destination message queue ID 1m110.

Thereafter, in order to process another message within the temporary keep message queue 1m4, the system repeats the operation of the step 1ra11 to judge the presence or absence of a message.

The embodiment of the present invention has been explained above. Another embodiment thereof will be explained in detail below.

Fig. 17 shows a structure of a server object 70 for centralizedly managing several programs for services.

The service object 70 includes an interface name 700, the client stub 1c, server skeleton 2s and routing program 1r in the foregoing embodiment.

Shown in Fig. 16 is an arrangement of an inter-object communication system which uses a dynamic service object loader for causing the client object 10, server object 20 and router 22 to load the service object of Fig. 17 as necessary.

In the present arrangement, dynamic object service loaders 6d1, 6d2 and 6d3 and a memory 7m for storing the service object 70 therein are additionally provided in the entire arrangement of the foregoing embodiment.

The dynamic object service loader 6d1, which is called by the client object 10, dynamically loads the service object 70 and passes the client stub 1c to the client object 10.

Thereafter, the client object 10 utilizes the client stub 1c as in the foregoing embodiment.

Even the dynamic object service loader 6d2 and 6d3 also each perform similar operations in the server object 20 and router 22.

The memory 7m may be placed on the computer 6 or 3 if necessary.

The present invention has for example the following six advantages (1) to (6) in accordance with the aforementioned method.
(1) When the client object designates the interface name for its communication, the service can be used without explicitly designating the server object.
(2) The object which provides the service is not always single. When the router delivers a message to a plurality of communication destinations, one-to-multipoint communication can be realized without the programmer of the client object recognizes it.
(3) Even when the object which provides the service is added, deleted or changed, the message can be delivered without causing the router to affect the client object, by the server object causing to suitably update the routing information (relating to the service provided by its own).
(4) When the service provider or the programmer of the server object customizes the routing method for causing the router to determine the communication destination, finer message delivery control can be realized.
(5) When the service provider or the programmer of the server object specifies a method for causing the router to integrate messages having the same contents, the amount of messages can be reduced and thereby the load of the server object can be reduced.
(6) When the client stub, server skeleton and routing program are combined into a single service object so that, at the time of execution, the client object, server object and router will dynamically load the service object respectively; the program modules can be centralizedly managed and application installation can be simplified.

## Claims

1. A method for converting an interface definition description in an inter-object communication system wherein a client object (10) operating on either one of a plurality of computers (1,2,3) in a network (8) or on a single computer sends a message to a server object (20) operating on the same or another computer to execute a predetermined processing operation, said method comprising:
causing an interface definition converting program to convert an interface definition description described in an interface definition language to thereby generate a client stub (1c), a server skeleton (2s) and a routing program (1r,2r),
said interface definition description including one or more of a method definition description of data necessary for said predetermined processing operation, and a processing result, and a message description specifying a format of the message to be sent in response to said method definition description,
said client stub being called to cause said client object to send the message,
said server skeleton including a server registration method for storing, in a routing information memory routing information for specifying the format of said message which said server object itself can process when started and also including a method for describing said predetermined processing operation to be executed when said server object receives the message, and
said routing program judging whether or not the processing of said server object associated with said routing information of said message is possible through comparison between said message and said routing information.

2. An inter-object communication method wherein a client object (10) operating on either one of a plurality of computers (1,2,3) in a network (8) or on a single computer sends a message to a server object (20) operating on the same or another computer to execute a predetermined processing operation, said method comprising the steps of:
storing a client stub (1c), a server skeleton (2s) and a routing program (1r,2r) generated based on an interface definition description;
when said server object is started, calling a server registration method and storing routing information in a routing information memory (3m) to cause said client object to call said client stub to send the message and to hold said sent message in a send message queue (1m1,2m1);
causing a router (12,22) to extract the message from said send message queue, to determine a send destination object in accordance with said routing program and to add the received message in a receive message queue (1m2,2m2) associated with said send destination object; and
causing said server skeleton to extract the message from said receive message queue and causing said server object to execute said predetermined processing operation of the message extracted by said server skeleton.

3. A method for converting an interface definition description as set forth in claim 1, wherein said routing program adds a queueing option description including a message maximum number designation and a queueing time designation to a message description of said interface definition description, compares said message and said routing information to judge whether or not the processing operation by said server object associated with said routing information of said message is possible and, in the case of presence of said message maximum number designation, performs said queueing option judging operation.

4. An inter-object communication method as set forth in claim 2, wherein said router keeps the message extracted from said send message queue in a temporary keep message queue, and when another message has the same contents as said kept message, the router integrates the messages into a single message, and when the number of messages within the temporary keep message queue exceeds said message maximum number or when said queueing time elapses after said message is queued, the router adds said message to a receive message queue associated with said send destination object.

5. A method for converting an interface definition description as set forth in claim 1, wherein, in place of said routing program, a custom routing program is generated which compares said message and said routing information to judge whether or not the processing operation by said server object associated with said routing information of said message is possible and performs said matching option judging operation.

6. An inter-object communication method as set forth in claim 2, further comprising the steps of:
combining said client stub, said server skeleton and said routing program into a single server object and storing said service object in a service object memory;
before said client object sends a message, extracting said server object from said service object memory to call said client stub;
before said router determines said send destination object, extracting said server object from said service object memory to call said routing program; and
at the time of starting said server object, extracting said server object from said service object memory to call said server skeleton.
